# EUROPEAN PATENT APPLICATION

(11) **EP 1 286 132 A2**
(43) Date of publication of application: **26.02.2003**
(21) Application number: 02012832.8
(22) Date of filing: 10.06.2002
(51) Int. Cl.: G01B 9/00

(54) **Birefringent beam combiners for polarized beams in interferometers**

(30) Priority: 20.08.2001 US 933631
(71) Applicant: Agilent Technologies Inc. (a Delaware Corporation), Palo Alto, CA 94306-2024 (US)
(72) Inventor: Nevis, Elizabeth A., Sunnyvale, CA 94089 (US)
(74) Representative: Schoppe, Fritz, Dipl.-Ing.

(57) **Abstract**

An interferometer (200) includes a two-frequency laser (110), a polarizing beam splitter (220) that separates a beam from the laser into separate beams, and optical fibers (250, 255) that conduct the separate beams to a beam combiner (270) for interferometer optics (150). The beam combiner uses a birefringent material to merge desired orthogonal polarization components of two separate beams (310, 320) into a combined beam (330) that is input into the interferometer optics. Components of the two beams that lack the desired polarizations are directed away from the combined beam so that the combined beam contains highly orthogonal polarizations for frequency components.

## Description

### BACKGROUND

Precision interferometers generally measure a distance to or the movement of an object by comparing phase information of a measurement beam reflected from the object to phase information for a reference beam. A classical type of interferometer compares the measurement and reference beams by interfering the two beams and infers a difference in the path lengths of the measurement and reference beams from the phase differences that can be detected in the resulting interference fringes. The reference beam has a fixed path so that any change in the relative phase of the measurement and reference beams indicates movement of the object. Alternatively, a Doppler frequency shift in the measurement beam, which can be determined from comparisons of the frequencies of the measurement and reference beams, indicates the speed of an object along the direction of the measurement beam. The determined speed information can be integrated over a time to determine the distance that the object moved.

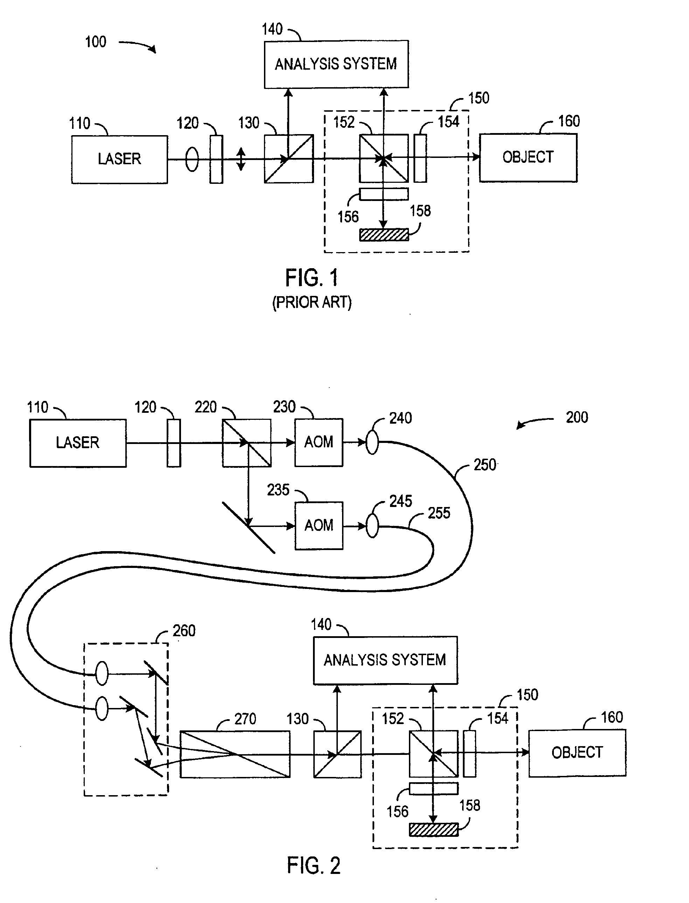

Two-frequency interferometers provide advantages over classical interferometers. Fig. 1 is a block diagram of a conventional two-frequency interferometer system 100 including a laser 110, a quarter-wave plate 120, a beam splitter 130, an analysis system 140, and interferometer optics 150.

Laser 110 generates a beam containing two component beams having different frequencies. The two different frequencies can be generated in the same laser cavity using Zeeman splitting, which provides the resulting beam components with different frequencies and opposite circular polarizations when exiting laser 110. Quarter-wave plate 120 converts the component beams with opposite circular polarizations into component beams with orthogonal linear polarizations. A beam splitter 130 reflects a portion of both component beams to provide first and second reference beams to analysis system 140. The remaining portions of the beam enter interferometer optics 150.

In interferometer optics 150, a polarizing beam splitter 152 reflects one of the polarizations (i.e., one frequency beam) to form a third reference beam directed toward a reference reflector 158 and transmits the other linear polarization (i.e., the other frequency) as a measurement beam toward an object 160 being measured. In an alternative version of the interferometer optics, a polarizing beam splitter transmits the component that forms the measurement beam and reflects the component that forms the reference beam.

The two-frequency interferometer system 100 makes a Doppler shift in the frequency of the measurement beam more easily measured by combining the measurement beam with the third reference beam to form a beat signal, having a frequency that is equal to the difference between the frequencies of the measurement and the third reference beams. For the recombination of the measurement and third reference beams, two-frequency interferometer system 100 uses outward and return passes of the reference and measurement beams through quarter-wave plates 154 and 156 to change the polarizations of the reference and measurement beams. The returning reference beam has the linear polarization that passes through polarizing beam splitter 152 to analysis system 140, and the returning measurement beam has the polarization that reflects from polarizing beam splitter 152 toward analysis system 140.

The Doppler frequency shift in the measurement beam provides a frequency shift in the beat signal that is a larger percentage of the frequency of the beat signal and therefore easier to measure. The frequency of this beat signal can be compared to the frequency of a beat signal generated from a combination of the first and second reference beams to accurately determine the Doppler frequency shift. Analysis system 140 can analyze the frequency shift to determine the speed and/or distance moved for object 160.

A concern for interferometers such as interferometer system 100 is the need to maintain precise relative alignment and orientations of the measurement and reference beams. The common solution to this problem is to precisely align laser 110 in the immediate vicinity of interferometer optics 150. This allows precision delivery of an input beam at the desired point, but for the thermal environment of the interferometer, a close placement of laser 110 undesirably provides a heat source that can create or change thermal gradients in interferometer optics 150 causing signal loss or measurement errors.

Transmission of the beam from laser 110 to interferometer optics 150 on an optical fiber would allow mounting laser 110 further from interferometer optics 150 and reduce the thermal effects of laser 110 on the precision of measurements. However, currently known polarization-preserving fiber systems permit unacceptable levels of cross-talk that mix the two polarizations, damaging the precision of the measurements.

In view of the limitations of current interferometer systems, techniques are desired that can separate a laser from the thermal environment of an interferometer, while providing precision beam delivery without mixing the polarization/frequency components.

### SUMMARY

In accordance with an aspect of the invention, different frequency components from a laser are separated and transmitted on different optical fibers to avoid cross talk. A beam combiner containing a birefringent material combines the beams from the two optical fibers into a single beam having components with different frequencies and polarizations. The birefringent material in the beam combiner extinguishes or otherwise removes unwanted polarization components of the beams from the optical fibers so that the two frequency components in the combined beam have polarizations that are extremely linear and orthogonal.

One specific embodiment of the invention is an interferometer including a light source, a beam combiner, and interferometer optics. The light source provides a first beam having a first polarization and a first frequency and a second beam having a second polarization and a second frequency. The beam combiner contains a birefringent material, and is positioned and oriented to receive the first beam and the second beam and produce a combined beam, which interferometer optics receive from the beam combiner.

The interferometer generally uses a first optical fiber optically coupled to receive the first beam from the-source and a second optical fiber optically coupled to receive the second beam from the source. The first and second optical fibers provide the first and second beams to the beam combiner, which permits mounting of the source away from the interferometer optics. This is desirable when the source includes a heat source such as a laser that can interfere with the operation of the interferometer optics.

The beam combiner in accordance with the invention has multiple alternative configurations including but not limited to Rochon prisms, Cotton prisms, 2-element Wollaston prisms, and 3-element Wollaston prisms.

Another embodiment of the invention is a method for operating an interferometer. The method includes directing first and second beams down first and second optical fibers and directing the first and second beams from the fibers into a beam combiner containing a birefringent material. The beam combiner combines the first and second beam into a combined beam and outputs the combined beam into interferometer optics. The paths of the first and second beams into the beam combiner can be collinear with but opposite in direction to output beams from the beam combiner, when the beam combiner is used as a polarizing beam splitter.

### BRIEF DESCRIPTION OF THE DRAWINGS

Fig. 1 is a block diagram of a known two-frequency interferometer.

Fig. 2 is a block diagram of a two-frequency interferometer in accordance with an embodiment of the invention.

Figs. 3A, 3B, 3C, and 3D are ray trace diagrams respectively of a Rochon prism, a Cotton prism, a Wollaston prism, and a three-element Wollaston prism used as beam combiners in accordance with alternative embodiments of the invention.

Use of the same reference symbols in different figures indicates similar or identical items.

### DETAILED DESCRIPTION

An interferometer system in accordance with an embodiment of the invention splits a two-frequency beam from a laser into two separate beams having different frequencies and orthogonal polarizations. The two beams are transmitted on separate polarization-preserving optical fibers and combined in to a single beam for input into the optics of the interferometer.

A beam combiner in accordance with the invention uses an optical element containing a birefringent material. The birefringent optical element combines the portions of the beams having the desired polarizations to provide an input beam and cleans up or removes the portions of the beams having the incorrect polarizations. Accordingly, the input beam contains frequency components having polarizations that are extremely linear and orthogonal to each other.

Fig. 2 is a block diagram of an interferometer system 200 in accordance with an embodiment of the present invention. Interferometer system 200 includes a laser 110, a quarter-wave plate 120, a polarizing beam splitter 220, accousto-optical modulators (AOMs) 230 and 235, optical fibers 250 and 255, adjusting optics 260, a beam combiner 270, a beam splitter 130, and interferometer optics 150.

Laser 110 and quarter wave plate 120 act as a source of a beam having two distinct frequency components with orthogonal linear polarizations. An exemplary embodiment of laser 110 is a commercially available laser such as a 5517D available form Agilent Technologies, Inc., which operates as described above by using Zeeman splitting to generate the two frequency components in the same laser cavity. Zeeman splitting in this manner can generate a heterodyne beam containing frequency components with frequencies f1' and f2' and a frequency difference f2'-f1' of about 2 MHz. The two frequency components have opposite circular polarizations. Quarter-wave plate 120 changes the polarizations of the frequency components so that the frequency components have orthogonal linear polarizations.

Polarizing beam splitter 220 separates the two frequency components. In the illustrated embodiment, the lower frequency component has a polarization that polarizing beam splitter 220 transmits to AOM 230, and the higher frequency component has the polarization that polarizing beam splitter 220 reflects toward AOM 235. Polarizing beams splitter 220 can be commercially available high quality beams splitter that provides high extinction ratios for one linear polarization in the transmitted beam and the orthogonal linear polarization in the reflected beam. To further improve the extinction ratios, polarizing beam splitter 220 can be rotated to a yaw angle that provides the best results and the cleanest separation of the frequency components. Accordingly, the input beam input will generally not be normal to the entrance surfaces of polarizing beam splitter 220. A co-filed U.S. patent application entitled, "Alignment Method For Optimizing Extinction Ratios Of Coated Polarizing Beam Splitters", Attorney Docket No. 10010512, which is hereby incorporated by reference in its entirety, further describes aligning a polarizing beam splitter to maximize performance in separating the two frequency components.

AOMs 230 and 235 operate at different frequencies (e.g., 80 MHz and 86 MHz) and change the frequencies of the two beams to further separate the frequencies of the two beams. The beams output from AOMs 230 and 235 have respective frequencies f1 and f2 that are about 8 MHz apart. The wider frequency separation allows interferometer system 200 to accurately measure faster moving objects.

Lenses 240 and 245 focus the separate beams into separate polarization preserving optical fibers 250 and 255, respectively. In an exemplary embodiment of the invention, polarization-preserving optical fibers 250 and 255 are commercially available optical fibers such as available from Wave Optics, Inc., Coming, Inc., or Fujikura America, Inc. Polarization-preserving fibers 250 and 255 deliver the separate beams to adjustment optics 260 that direct the two beams into a beam combiner 270. The use of optical fibers 250 and 255 allows the laser 110 and AOMs 230 and 235 to be mounted away from interferometer optics 150. Accordingly, heat generated in laser 110 and AOMs 230 and 235 does not disturb the thermal environment of interferometer optics 150. Additionally, laser 110 and AOMs 230 and 235 do not need to have fixed positions relative to interferometer optics 150, which may provide significant advantages in applications having little space near the object being measured.

Adjustment optics 260 precisely align the beams from optical fibers 250 and 255 for combination in beam combiner 270 to form a collinear beam. A variety of optical/mechanical systems can be employed for adjustment optics and generally have a configuration that depends on the available space and the maximum curvature of optical fibers 250 and 255 that will sufficiently preserve the intensity and polarization of the beams being carried. In an exemplary embodiment of the invention, lenses at the ends of optical fibers 250 and 255 have precision mounting that permit adjustment so that the exit beams from optical fibers 250 and 255 are directed directly into beam combiner 270. A co-filed U.S. patent application entitled "Direct Combination of Fiber Optic Light Beams", Attorney Docket No. 10010323, which is hereby incorporated by reference in its entirety, further describes adjustment optics that position beams for combination.

In accordance with an aspect of the invention, beam combiner 270 contains a birefringent material such as calcite that directs beams having the desired polarizations into a single combined beam and efficiently removes any components in the beams that do not have the desired polarization. In particular, polarizing beam splitter 220 may not be 100% efficient at isolating the two orthogonal linear polarizations. Additionally, AOMs 230 and 235 and fittings or other structures in associated optical fibers 250 and 255 may change the polarization of the beams. Beam combiner 270 directs portions of the beams having incorrect polarizations away from combined beam, so that the polarizations of the two frequency components in the combined beam have extremely linear and orthogonal polarizations.

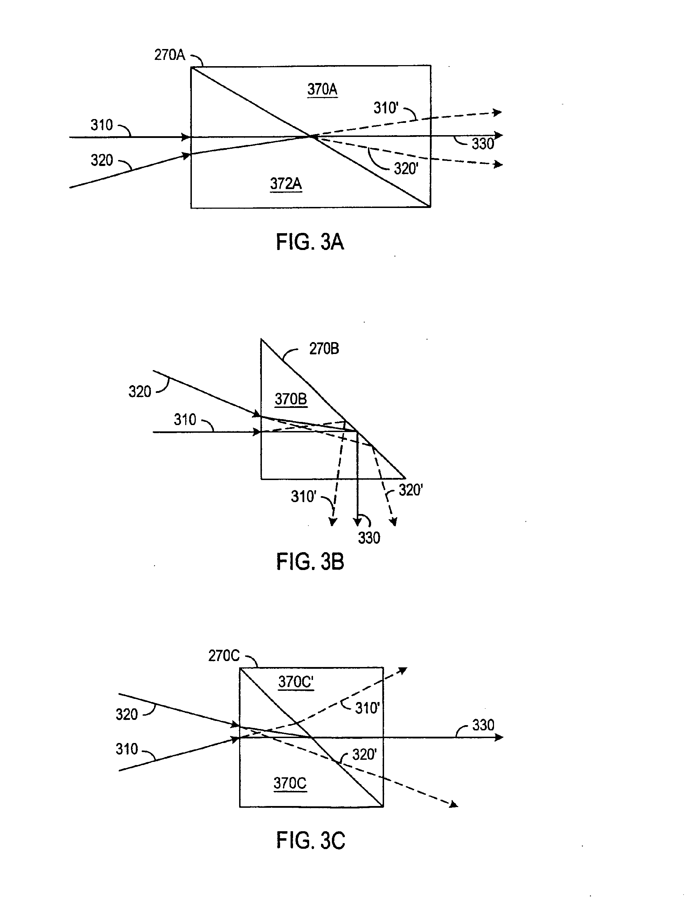

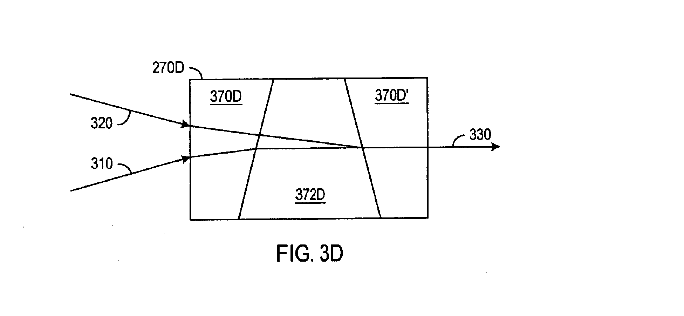

Figs. 3A, 3B, 3C, and 3D show alternative embodiments of beam combiners in accordance with the invention, which contain birefringent materials. Optical elements containing birefringent materials are known in the art for use as beam splitter and can be obtained commercially from a variety of sources including, for example, Karl Lambrecht Corporation of Chicago, Illinois. However, in accordance with the present invention, birefringent optical elements are used as beam combiners for a two-frequency interferometer and have been found to provide superior performance when compared to thin film beam combiners.

Fig. 3A illustrates a beam combiner 270A that is a Rochon prism. Rochon prism 270A includes a calcite prism 370A optically coupled to a refractive index and dispersion matching optical glass prism 372A of equal angle. Calcite prism 370A has a crystal orientation that transmits without deflection light having a first linear polarization and deflects light having a second linear polarization.

Beams 310 and 320 from separate optical fibers 250 and 255 (and adjustment optics 260) are incident on glass prism 372A. Beam 310 nominally has a first frequency and the first linear polarization but may include a component of the other frequency or polarization resulting from the output beams from the Zeeman split laser failing to have frequency components with perfectly orthogonal polarizations, beam splitter 220 failing to provide 100% separation, polarization changes that may arise between polarizing beam splitter 220 and Rochon prism 270A, and error in the orientation the optical fiber 250. Beam 320 nominally has a second frequency and the second linear polarization but may include a component of the other frequency or polarization. Beam 310 is incident normal to the surface of Rochon prism 270A, and beam 320 is at an incident angle selected according to the properties of Rochon prism 270A.

The portion of normal incident beam 310 having the first linear polarization passes straight through Rochon prism 270A without being deflected by calcite prism 370A. The portion of beam 320 having the second polarization is refracted at the entrance surface off glass prism 372A and deflected at the interface between prisms 370A and 372A, but the incident angle of beam 320 is selected so that the portion of beam 320 having the second polarization combines with the portion of beam 310 having the first polarization to form a combined beam 330. Generally, the separation and angle between input beams 310 and 320 match the separation and angle between output beams that would result if Rochon prism 270A were used as a beams splitter for an input beam collinear with but opposite in direction to combined beam 330.

In Fig. 3A, a deflected beam 310' represents the portion of beam 310 that does not have the first polarization. Calcite prism 370A deflects any component of beam 310 that causes the polarization of beam 310 to be elliptical or off the first axis. Accordingly, calcite prism 370A separates the portion of beam 310 not having the first polarization and thereby forms beam 310', which is not part of combined beam 330. The portion of beam 320 having the first polarization is not deflected at the interface between prisms 370A and 370B and forms a beam 320', which is similarly separated from combined beam 330. Beams 310' and 320' can be blocked or otherwise redirected to prevent contamination of combined beam 330.

Fig. 3B shows a beam combiner 270B that is a Cotton prism. Cotton prism 270B is a calcite prism having a crystal orientation that does not deflect a normal incident beam having the first linear polarization at the entrance surface. Cotton prism 270B receives beam 310 at normal incidence and beam 320 at an angle selected according to the properties of Cotton prism 270B. Accordingly, the portion of beam 310 having the first polarization passes without deflection through the entrance surface and undergoes total internal reflection at an interior surface of Cotton prism 270B. The incident angle of beam 320 is such that the portion of beam 320 having the second polarization is deflected at the entrance surface and the interior surface by the amount required for combining with the portion of beam 310 having the first polarization to form combined beam 330.

The portion of beam 310 having the second polarization is deflected into a beam 310' that is separated from combined beam 330. Similarly, the portion of the second beam 320 having the first polarization is only refracted at the entrance surface, and accordingly leaves Cotton prism 270B in a beam 320' separated from combined beam 330.

Fig. 3C illustrates a beam combiner 270C that is a 2-element Wollaston prism including two equal angle calcite prisms 370C and 370C' having optic axes orthogonally crossed. Prism 370C passes light with the first linear polarization without extraordinary deflection, and prism 370C' passes light with the second linear polarization without extraordinary deflection. The incident angles of both beams 310 and 320 are selected so that the deflection of the portion of beam 310 having the first polarization at entrance to calcite prism 370C and the deflection of the portion of beam 320 having the second polarization at entrance to calcite prism 370C' forms a combined beam 330. However, the portions of beams 310 and 320 having the incorrect polarizations are deflected into beams 310' and 320', which are separated from combined beam 330.

Fig. 3D illustrates a beam combiner 270D that is a 3-element Wollaston prism including two equal angle calcite prisms 370D and 370D' having the same optic axis and a calcite prism 372D having an optic axis that is orthogonal to the axes of the other prisms 370D and 370D'. Wollaston prism 270D operates as a beam combiner in a manner similar to that described above. In particular, incident beams 310 and 320 have incident angles and paths that correspond to exit beams of Wollaston prism 270D when Wollaston prism 270D is used as a polarizing beam splitter. Accordingly, the portions of beams 310 and 320 having the desired polarizations reverse beam paths found when the Wollaston prism 270D acts as a beam splitter and combine to form beam 330. Portions of beams 310 and 320 that do not have the desired polarizations do not follows the paths necessary to combine into beam 330 and are thus separated from combined beam 330.

The calcite beam splitters when used as beam combiners as described above can produce extinction ratios up to 10⁶:1 for visible light, and any polarization instability in the light input to the beam combiner results in a variation in the optical power coming out. Such intensity variations in small amounts are generally less harmful to measurement accuracy than the polarization instability. For instance, if the polarization mix of a beam of constant optical power varies between 1000:1 and 100:1, the unwanted leakage goes up by 10 times and has a large effect on measurement accuracy. However, after passing through a combiner having a 10,000:1 extinction ratio, the output polarization mix would be vary stable at very near 10,000:1, but the power would change by about 0.9%, which would have almost no effect on measurement accuracy.

The calcite combiner also provides an advantage in stability of the collinearity of the output beam. In particular, compared to a reflective combiner, the output beam collinearity of a refractive combiner is much less sensitive to dynamic tilt of the combiner due to opto-mechanical drift or accidental shock. When an optical combiner tilts under these circumstances, a transmitted beam is not deviated in angle, but undergoes a translation of its optic axis due to the change in incident and exit angles. A reflected beam is deviated in angle by twice the tilt of the element. A refracted beam is deviated in angle by an amount related to the difference in the refractive index between the components. In the case of a birefringent polarizing beam splitter, the difference in the refractive index is typically the difference between the ordinary and extraordinary indices of refraction. For calcite at 633nm, if the combiner is tilted at an angle A, the refracted beam is deviated by about 0.24*A for tilts in the plane of incidence, and by about 0.028*A for tilts out of the plane of incidence.

As described above, birefringent combiners produce highly linear and orthogonal polarizations even if the input beams are somewhat elliptical or non-orthogonal in polarizations. A consequence of this ability is that polarization instability, which can degrade accuracy of some types of interferometer measurements, is transformed into optical power instability, which has less effect on measurement accuracy.

Although the invention has been described with reference to particular embodiments, the description is only an example of the invention's application and should not be taken as a limitation. Various adaptations and combinations of features of the embodiments disclosed are within the scope of the invention as defined by the following claims.

## Claims

1. An interferometer comprising:
a source (110 and 220) providing a first beam (310) having a first polarization and a first frequency and a second beam (320) having a second polarization and a second frequency;
a beam combiner (270) containing a birefringent material, the beam combiner being positions and oriented to receive the first beam and the second beam and produce a combined beam (330); and
interferometer optics (150) that receives the combined beam from the beam combiner.

2. The interferometer of claim 1, wherein the beam combiner comprises a Rochon prism (270A).

3. The interferometer of claim 1, wherein the beam combiner comprises a Cotton prism (270B).

4. The interferometer of claim 1, wherein the beam combiner comprises a Wollaston prism (270C, 270D).

5. The interferometer of claim 4, wherein the Wollaston prism is a 3-element Wollaston prism (270D).

6. The interferometer of any of claims 1 to 5, further comprising:
a first optical fiber (250) optically coupled to receive the first beam from the source; and
a second optical fiber (255) optically coupled to receive the second beam from the source, wherein
the first and second optical fibers provide the first and second beams to the beam combiner.

7. The interferometer of any of claims 1 to 6, wherein the source comprises:
a laser (110) that generates a beam containing a first component having the first polarization and a second component having the second polarization; and
a polarizing beam splitter (220) positioned to split the beam from the laser into two component beams.

8. A method for combining beams, comprising:
directing a first beam down (310) a first path to a beam combiner (270) containing a birefringent material; and
directing a second beam down (320) a second path to the beam combiner, wherein the first and second paths into the beam combiner are collinear with but opposite in direction to paths of beams output from the beam combiner when the beam combiner is used as a polarizing beam splitter.

9. The method of claim 8, wherein the first beam comprises a first component having a first polarization and a second component having a second polarization, the beam combiner directing the first component for combination with the second beam and directing the second component away from the second beam.

10. The method of claim 8 or 9, further comprising:
directing the first and second beams down respective first and second optical fibers;
directing the first and second beams from the first and second fibers into the beam combiner containing the birefringent material, wherein the beam combiner combines the first and second beam into a combined beam; and
inputting the combined beam into interferometer optics.
